# EUROPÄISCHE PATENTSCHRIFT

(11) **EP 0 797 032 B1**
(45) Veröffentlichungstag und Bekanntmachung des Hinweises auf die Patenterteilung: **14.11.2001**
(21) Anmeldenummer: 97104566.1
(22) Anmeldetag: 18.03.1997
(51) Int. Cl.: F16K 1/42, F16J 15/02

(54) **Ventil sowie Verfahren zu dessen Herstellung**
Valve and its manufacturing process
Vanne et son procédé de fabrication

(30) Priorität: 21.03.1996 DE 19611128
(43) Veröffentlichungstag der Anmeldung: 24.09.1997
(73) Patentinhaber: HONEYWELL B.V., 1101 EA Amsterdam Z.O. (NL)
(72) Erfinder: Munsterhuis, Wim, 7751 GP Dalen (NL)
(74) Vertreter: Leson, Thomas Johannes Alois, Dipl.-Ing.

(56) Entgegenhaltungen:
- EP-A- 0 588 570
- DE-C- 71 059
- DE-C- 328 472
- DE-C- 627 735

## Beschreibung

Um bei einem ringförmigen Ventilsitz eine allseitig gleichmäßige Dichtung zu gewährleisten, ist es aus DE-B 22 53 059 bekannt, die an sich elastisch verformbare Ventildichtung im Zuge eines ersten Ventilschließvorgangs in ihrem dem Ventilsitz zugewandten Bereich teilweise über die Elastizitätsgrenze hinaus plastisch zu verformen, um eine exakte Anpassung der Dichtungsfläche an die Gegenfläche des Ventilsitzes zu erzielen. Diese plastische Verformung bleibt auch beim nachfolgenden Öffnen und bei allen zukünftigen Ventilspielen erhalten und gewährleistet einen rundum dichten Abschluß des Ventils und somit auch einen Ausgleich etwaiger Fertigungstoleranzen. Den beim Schließen des Ventils im Betrieb auftretenden Schließdruck nimmt dann der nicht plastisch verformte Teil des Dichtungsmaterials auf, der beim Schließen des Ventils elastisch verformt wird.

DE-A 23 46 332 zeigt eine Dichtung für den Verschluß eines Druckbehälters mit Hilfe eines Metallrings, der an einer Stirnseite eine rinnenförmige Ausnehmung aufweist, in welche ein ringförmiges, an der Vorderseite abgerundetes Gegenstück so hineingedrückt wird, daß die Schenkel des Metallrings mit ihren Außenseiten radial gegen umlaufende Dichtflächen des Gehäuses gedrückt werden. Durch die Axialbewegung des Gegenstücks begrenzende Anschläge wird sichergestellt, daß die Verformung des Metallrings im elastischen Bereich bleibt.

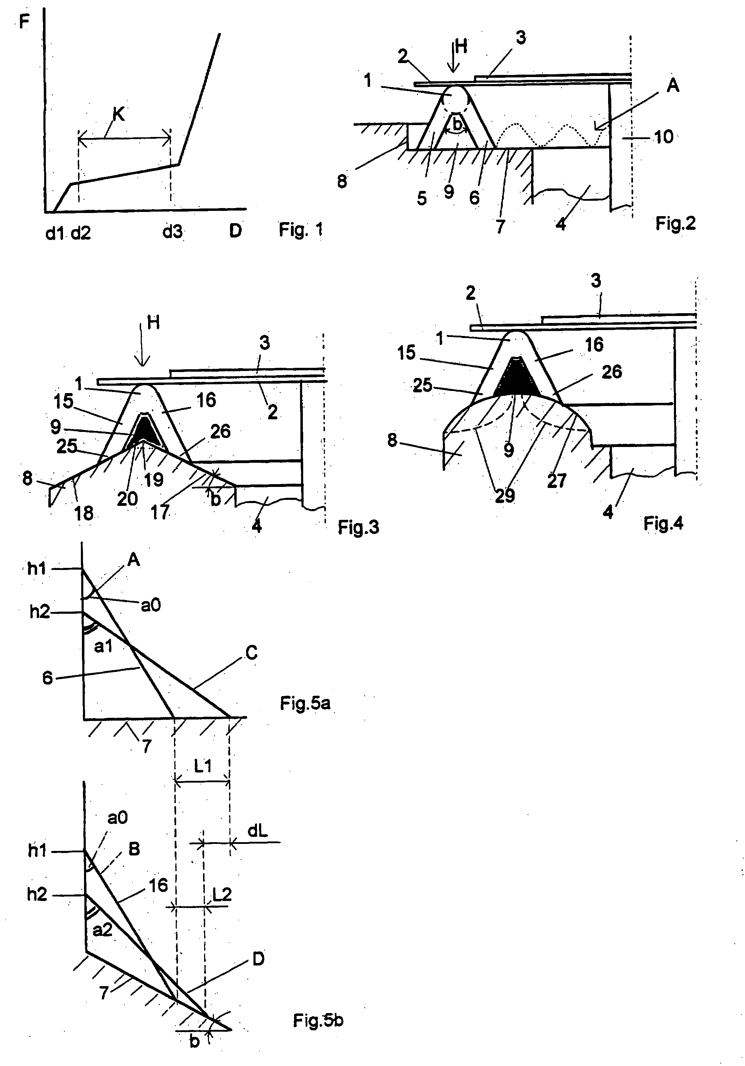

Besondere Toleranzprobleme bei der Herstellung von Ventildichtungen ergeben sich bei Ventilen mit sehr geringem Hub. Aus EP-A 0 588 570 ist ein Ventil gemäß den Merkmalen des Oberbegriffs von Anspruch 1 bekannt, dessen scheibenförmiger Schließkörper eine piezoelektrisch verformbare, in ihrem Mittelteil gehäusefest abgestützte Platte ist, deren Ränder mit einer ringförmigen, den Ventildurchlaß umschließenden Ventildichtung zusammenwirken. Eine dort in Figur 5 wiedergegebene Ausführungsform einer solchen Ventildichtung wird als Zweifeder-System beschrieben, bei dem die eine Feder beim erstmaligen Schließen des Ventils bleibend verformt und in dieser verformten Gestalt fixiert wird, während die zweite Feder während des späteren Betriebs für die elastische Abdichtung zwischen Ventilsitz und Schließkörper sorgt. Bei der dort in Figur 5 wiedergegebenen Ausführungsform besteht die zweite Feder aus einem O-Ring, während die erste Feder durch V-förmig schräggestellte Schenkelbleche gebildet ist, deren gespreizte freie Enden sich an der ebenen Oberfläche des Ventilsitzes abstützen und auf der anderen Seite den O-Ring tragen. Es ergibt sich somit eine V-förmige Struktur, deren Scheitel durch den O-Ring gebildet ist, während die Schenkelenden auf dem Ventilsitz aufliegen. Beim erstmaligen Schließen werden diese Schenkel bleibend verformt und in ihrer verformten Gestalt durch einen den Zwischenraum zwischen diesen Schenkeln, dem O-Ring und dem Ventilsitz ausfüllenden aushärtbaren Klebstoff gehalten, der zugleich die ringförmige Ventildichtung am Ventilsitz befestigt und später nach dem Aushärten den verformbaren O-Ring abstützt. Letzterer dient im Betrieb wie üblich als elastisch verformbare Ventildichtung.

Verwendet man zwei, die beiden Schenkel der Halterung für den O-Ring bildende, bleibend verformbare Ringe, so hat sich gezeigt, daß bei der erstmaligen Verformung der beiden Schenkel, insbesondere der innere Schenkel, eine wellenförmige Gestalt annimmt und deshalb keine umlaufende Abstützung auf dem Ventilsitz gewährleistet. Die wellenförmige Verformung hat femer zur Folge, daß Klebstoff aus dem Innenraum zwischen Dichtung und Ventilsitz austreten kann.

Um diese Schwierigkeiten zu beseitigen, schlägt die Erfindung die im Anspruch 1 gekennzeichnete Ausgestaltung der Abstützflächen für die Schenkelenden vor. Bei einer Wölbung oder Abschrägung der Abstützflächen des Trägers erhalten die verformbaren Schenkelenden einen zusätzlichen Freiheitsgrad ihrer Bewegung, so daß sie weniger in sich selbst verformt werden müssen und folglich die Wellenbildung unterbleibt. Damit ist eine dauerhafte und allseitig dichte Befestigung der Ventildichtung am Träger mit einfachen Mitteln gewährleistet. Liegen die Schenkel an einer umlaufenden Rippe des Trägers an, so läßt sich der mit einer aushärtbaren Füllmasse zu füllende Freiraum zwischen dem Dichtungsring, dem Schenkeln und dem Träger auf ein Minimum reduzieren, so daß auch jegliche Formänderung im Zuge des Aushärtens stark verringert oder vermieden wird. Weitere vorteilhafte Ausgestaltungen der Erfindung ergeben sich aus den übrigen Unteransprüchen.

Die Erfindung wird nachfolgend anhand der Zeichnungen erläutert. Darin zeigt:
- Figur 1: die gewünschte Federkennlinie einer solchen Dichtung;
- Figur 2: eine aus Figur 5 von EP-A 0 588 570 bekannte zweiteilige Ringdichtung;
- Figur 3: eine erste Ausführungsform der Erfindung;
- Figur 4: eine zweite Ausführungsform dieser ringförmigen Ventildichtung; und
- Figur 5: schematisch die Verformung des Innenschenkels der Ringdichtung.

In Figur 1 ist die Schließkraft F des Ventils über dem Ventilhub D aufgetragen. Sobald der Schließkörper bei d1 auf den Ventilsitz aufsetzt, steigt die Schließkraft F zunächst beträchtlich an bis im Punkt d2 dieser Anstieg stark verringert wird, weil die rigfürmigen Schenkelbleche anfangen, sich elastisch zu verformen und ihre Federkraft den Anstieg bestimmt. Im Punkt d3 ist der Bereich der elastischen Verformbarkeit erschöpft, und die Schließkraft steigt erneut stark an, weil nunmehr die Federkonstante des Dichtungsrings den Anstieg bestimmt. Es ist erwünscht, einen möglichst breiten Bereich K nahezu gleichbleibender Schließkraft zu haben. Wächst nämlich die Schließkraft in diesem Arbeitsbereich zu stark an, so besteht die Gefahr, daß der Schließkörper nicht oder nicht weit genug öffnet und sich beim Öffnen des Ventils keine gleichförmige Öffnungsbewegung ergibt.

Bei der in Figur 2 wiedergegebenen bekannten Dichtung besteht das elastisch verformbare Dichtungselement 1 aus einem elastomeren Werkstoff, z.B. Gummi, der als O-Ring an der Ventilplatte 2 anliegt. Diese wird durch eine Piezoscheibe 3 verformt, die sich gehäusefest an einem den Ventildurchlaß 4 durchsetzenden Stift 10 abstützt. Der O-Ring 1 ist mit Hilfe zweier umlaufender Schenkel 5 und 6 an einer ebenen Trägerβäche 7 des Ventilsitzes 8 abgestützt. Die beiden unter einem Winkel b gespreizten Schenkel 5 und 6 sind an ihren Schenkelenden mit der Trägerfläche 7 verklebt. Der Zwischenraum 9 zwischen den beiden Schenkeln ist mit einem aushärtbaren Klebstoff gefüllt. Bei der Montage der aus den Elementen 1, 5 und 6 bestehenden Dichtung wird diese zunächst in nach oben offener Lage mit einem aushärtbaren Klebstoff, z.B. Epoxydharz gefüllt, dann umgedreht und auf den Träger 7 aufgesetzt. Dann wird der Schließkörper 2, 3 unverformt und spannungsfrei auf den jetzt oben liegenden Rand der Ringdichtung, d.h. auf den O-Ring 1 aufgelegt. Dabei liegt die obere Stimfläche des zentralen Stifts 10 zunächst in einem vorgegebenen, geringen Abstand unter der Bodenfläche der Ventilplatte 2. Anschließend wird der Mittelteil des Schließkörpers 2, 3 durch eine relativ starke Kraft H, z.B. eine Feder, nach unten gedrückt bis er an der zuvop mit einem Klebstoff bestrichenen Stirnfläche 10 des Stifts anliegt. Dabei paßt sich zugleich die Gestalt der Schenkel 5 und 6 rundum an den Abstand zwischen Ventilsitz 7 und Schließkörper 2 an, wodurch etwaige Fertigungstoleranzen ausgeglichen werden. Sodann wird der Klebstoff im Zwischenraum 9 sowie zwischen Stift 10 und Mittelteil der Ventilplatte 2 ausgehärtet und gleichzeitig eine Verklebung der Enden der Schenkel 5 und 6 auf der Trägerfläche 7 erzielt. Die Deformation der Schenkel 5, 6 bestimmt die Anfangslast auf den Schließkörper.2 und damit die Schließkraft des Ventils.

Wird an die Piezoscheibe 3 eine elektrische Spannung gelegt, so wölbt sich die Scheibe mit ihrem Außenrand um beispielsweise 0,15 mm nach oben und hebt vom O-Ring 1 ab, dessen elastische Verformung nur etwa 0,05 mm beträgt. Es entsteht somit ein Durchlaß-Ringspalt von etwa 0,1 mm Öffnungshöhe.

Im späteren Betrieb erfolgt nur noch eine elastische Verformung des O-Rings 1 um etwa 0,05 mm. Die erwähnte Druckfeder kann zugleich den oberen Stromanschluß für die Piezoplatte 3 bilden, während der untere über den Stift 10 hergestellt wird.

Bei der Verformung der ringförmigen Schenkel 5 und 6 besteht insbesondere bei geringen Dichtungsdurchmessern, d.h. bei kleinen Ventilen, die Gefahr, daß sich der untere Rand, insbesondere des inneren Schenkels 6 bei der Montage wellenförmig verformt, wie dies durch die Linie A stark übertrieben angedeutet ist. Damit besteht keine rundum gleichmäßige Abstützung des Schenkels 6 am Träger 7 mehr und unter Umständen kann Kleber aus dem Innenraum 9 in den Raum zwischen Dichtung und Durchlaß 4 austreten.

Diese Schwierigkeiten werden durch die Erfindung vermieden. In Figur 3 ist die Abstützfläche des Ventilsitzes oder Trägers 8 für die Schenkelenden 25, 26 im Querschnitt dachförmig abgeschrägt und diese Enden 25 und 26 der Schenkel 15 und 16 liegen auf diesen abgeschrägten Teilen 17, 18 auf Damit können beim erstmaligen Anpressen der Ventildichtung an den Träger 8 die Schenkelenden 25 und 26 etwas ausweichen, wodurch einerseits die Gefahr der Wellenbildung beseitigt ist und andererseits eine über den gesamten Umfang gleichmäßige Abstützung der Schenkelenden 25 und 26 am Träger 8, 17, 18 gewährleistet ist. In dieser Position wird dann der zwischen den Schenkelenden 25, 26 und den Stützflächen 17, 18 sowie der im Freiraum 9 befindliche Kleber ausgehärtet, so daß der O-Ring 1 seine alle Toleranzen ausgleichende Lage beibehält. Das Aushärten kann beispielsweise thermisch oder mittels Ultraschall oder Hochfrequenzstrahlung erfolgen. Es ist günstig, wenn die auf dem Träger aufsitzenden Schenkelenden 25 und 26 des Doppelschenkelrings 15, 16 entsprechend der Neigung der Trägerflächen 17, 18 abgeschrägt sind. Der Scheitel des Doppelschenkelrings mit dem O-Ring 1 befindet sich oberhalb der Firstlinie 19 der dachförmigen Abstützfläche 17,18. Wie gestrichelt angedeutet kann der Bereich 20 des Trägers 17, 18 zwischen den Schenkelenden 25 und 26 an sich flach sein. Der O-Ring 1 mit seinen beiden umlaufenden Schenkeln 15 und 16 besteht beispielsweise aus Gummi. Der Neigungswinkel b der Dachflächen 6 und/oder 7 gegenüber der Ebene des Ventilsitzes beträgt etwa 5 bis 70 Grad.

In Figur 3 ist der Träger 8 sowohl auf der Innenseite 17 als auch auf der Außenseite 18 gegenüber der Horizontalen geneigt. Für die gewünschte Verbesserung des Toleranzausgleichs kann es genügen, nur eine dieser beiden Flächen 17 bzw. 18 schräg zu stellen und die andere flach zu lassen.

Bei der zweiten Ausführungsform gemäß Figur 4 ist die Abstützfläche 27 des Ventilsitzes 8 zum Dichtungsring 1 hin konvex gewölbt, wodurch sich auch hier für die Schenkelenden 25 und 26 als weitere Freiheitsgrad der Bewegung ein seitliches Ausweichen beim anfänglichen Zusammendrücken der zweiteiligen Dichtung ergibt. Auch hier wird der Zwischenraum 9 zwischen Dichtungsring 1 den Schenkeln 15 und 16 und dem Träger 27 mit einem Klebstoff gefüllt, der nach der erstmaligen Verformung der Schenkel 15 und 16 ausgehärtet wird und somit den Dichtungsring 1 in der nach der erstmaligen Verformung eingenommenen Position festhält. Die Abstützfläche könnte auch auf der Innen- und/oder der Außenseite konkav gewölbt sein, wie dies die gestrichelte Linie 29 in Fig. 4 andeutet.

Die erfindungsgemäße Ausgestaltung der ringförmigen Ventildichtung gestattet größere Toleranzen zwischen Ventilsitz und Schließkörper hinsichtlich deren Höhe und Flachheit. Da die Schenkel 15 und 16 bei der Anordnung nach den Figuren 3 bis 4 wesentlich größere Toleranzen überbrücken können als im Stand der Technik ergibt sich im Arbeitsbereich K der Federkennlinie nach Figur 1 ein wesentlich flacherer Anstieg und damit eine bessere Konstanz der Federkraft als bei der bekannten Ventildichtung nach Figur 2.

Zur Erläuterung der Wirkungsweise und Vorteile der Erfindung werden anschließend die Verformungen des inneren Schenkels 6 bzw. 16 des Doppelschenkelrings bei der bekannten Anordnung gemäß Figur 2 bzw. bei der erfindungsgemäßen Anordnung gemäß Figur 3 verglichen. Figur 5a zeigt in der Stellung A den Innenschenkel 6 im spannungsfreien Zustand und in der Stellung C im zusammengebauten, also vorgespannten Zustand. Dementsprechend zeigt Figur 5b den Innenschenkel 16 in der Position B unbelastet und in der Position D im zusammengebauten und fixierten Zustand.

Von der unbelasteten Position A des Innenschenkels 6 aus, wo sich das obere Ende des Schenkels 6 in der Höhe h1 befindet, wird bei der bekannten Anordnung unter der Einwirkung der erwähnten Feder oder Vorspannkraft dieses obere Ende auf die Höhenlage h2 heruntergedrückt. Dabei weicht das untere Ende längs der Sitzfläche 7 um den Betrag L1 aus. Der ursprüngliche Schrägstellungswinkel a0 wird auf a1 vergrößert. Der Innenschenkel 6 geht von der Position A in die Position C über. Dabei ist der Einfachheit halber angenommen, daß sich der Schenkel 6 nicht wellenförmig verformt.

Bei der erfindungsgemäßen Ausführungsform gemäß Figur 5b wird unter der Einwirkung der genannten Vorspannkraft das obere Ende des Schenkels 16 wiederum von der Höhenpositionen h1 auf die Position h2 heruntergedrückt. Dabei ändert sich der Anfangsschrägstellungswinkel a0 in einen Winkel a2, welcher kleiner ist als a1. Außerdem ist beim Übergang des Innenschenkels 16 von der Position B in die Position D die horizontale Verschiebung L2 des unteren Endes des Schenkels 16 kleiner als die horizontale Verschiebung L1 des unteren Endes des Schenkels 6 im Stand der Technik. Diese Verringerung der horizontalen Verschiebung L um den Betrag L1 - L2 = dL bewirkt, daß die Gefahr einer Wellenbildung im Schenkel 16 wesentlich geringer ist als im Schenkel 6 beim Stand der Technik.

Außerdem ist, wie erwähnt, der Neigungswinkel a2 des Schenkels 16 bei der Anordnung gemäß der Erfindung (Figur 5b) wesentlich geringer als der Schrägstellungswinkel a1 des Schenkels 6 im Stand der Technik (Figur 5a). Damit ist auch die Empfindlichkeit für Änderungen der Höhe h verringert. Nimmt man in beiden Fällen eine Höhentoleranz dh gleicher Größe um den Wert h2 an, so sieht man, daß sich über diesen Toleranzbereich der Winkel a2 weniger ändert als der Winkel a1. Dies hat zur Folge, daß die Konstruktion gemäß Figur 5b für Differenzen der Höhe h wesentlich weniger empfindlich ist als die bekannte Anordnung nach Figur 5a.

In den drei gezeigten Ausführungsbeispielen wird die Ventildichtung jeweils vom Ventilsitz 8 getragen. Es ist offensichtlich, daß sie ebensogut am Schließkörper 2 vorgcsehen und mit einem flachen oder beliebig geformten Ventilsitz zusammenarbeiten könnte. Die Anbringung der Ventildichtung am Ventilsitz ist jedoch wegen der hierdurch verringerten Masse des Ventilschließkörpers günstiger, was sich besonders bei schnell arbeitenden Ventilen mit geringem Hub, also insbesondere piezoelektrisch gesteuerten Ventilen als vorteilhaft erweist.

## Patentansprüche

1. Ventil, insbesondere Gasventil, mit einem Ventilsitz in Form einer ringförmigen Ventildichtung und mit einem mit dem Ventilsitz zusammenwirkenden Ventilschließkörper (2, 3), wobei die ringförmige Ventildichtung einen in Hubrichtung des Ventilschließkörpers (2, 3) wirksamen, im Betrieb elastisch verformbaren ringförmigen Dichtungsteil (1) sowie hiermit verbundene zweischenklige, unter der Einwirkung einer Anfangskraft bleibend verformbare, an ihrem Scheitel den elastisch verformbaren Dichtungsteil (1) tragende Halteteile (15, 16) aufweist, wobei sich die Halteteile (15, 16) mit den Schenkelenden (25, 26) an einem Träger (8) abstützen und an diesem befestigt sind, wobei die verformbaren Halteteile (15, 16) ebenfalls ringförmig sind, und wobei der von den Halteteilen (15, 16) und dem Träger (8) begrenzte Raum (9) mit einer aushärtbaren Füllmasse gefüllt ist,
**dadurch gekennzeichnet,daß**
wenigstens eine der trägerseitigen Abstützflächen (17, 18, 27, 29) für die Schenkelenden (25, 26) unter einem von 90° verschiedenen Winkel gegenüber der Hubrichtung des Ventilschließkörpers (2, 3) geneigt ist.

2. Ventil nach Anspruch 1, **dadurch gekennzeichnet, daß** die geneigte Abstützfläche (27, 29) des Trägers (8) zum Dichtungsring (1) konvex oder konkav gewölbt ist.

3. Ventil nach Anspruch 1, **dadurch gekennzeichnet, daß** die geneigte Abstützfläche (17, 18) des Trägers (8) nach innen und/oder außen hin abgeschrägt ist.

4. Ventil nach Anspruch 3, **dadurch gekennzeichnet, daß** die Abstützflächen (17, 18) nach beiden Seiten hin dachförmig geneigt sind und der Scheitel des Doppelschenkelrings (15, 16) im geöffneten Zustand des Ventils sich oberhalb der Firstlinie (19) der dachförmigen Abstützflächen (17, 18) befindet.

5. Ventil nach Anspruch 3 oder **dadurch gekennzeichnet, daß** der Neigungswinkel (b) der abgeschrägten Trägerflächen (17, 18) gegenüber der Ebene des Ventilsitzes zwischen 5° bis 70° liegt, vorzugsweise etwa 30° beträgt.

6. Ventil nach Anspruch 3, 4 oder 5, **dadurch gekennzeichnet, daß** die auf dem Träger (8) aufsitzenden Schenkelenden (25, 26) des Doppelschenkelrings (15, 16) entsprechend der Neigung der Trägerfläche (17, 18) abgeschrägt sind.

7. Verfahren zum Herstellen eines Ventils, insbesondere eines Gasventils, nach einem der vorangehenden Ansprüche, wobei das Ventil einen Ventilsitz in Form einer ringförmigen Ventildichtung und einen mit dem Ventilsitz zusammenwirkenden Ventilschließkörper (2, 3) aufweist, mit folgenden Schritten:
a) ein ringförmiges Dichtelement, bestehend aus einem elastomeren Ring (1) und zwei unter einem spitzen Winkel vom Ring abstehenden, ebenfalls umlaufenden Schenkeln (15, 16) wird in einem von den beiden Schenkeln (15, 16) begrenzten Raum (9) mit einem aushärtbaren Klebstoff gefüllt;
b) das Dichtelement wird sodann mit seinen Schenkelenden (25, 26) auf eine ringförmige, einen Ventildurchlaß (4) umgebende Trägerfläche (17, 18; 27, 29) aufgesetzt, welche zum Ventilschließkörper (2, 3) hin entweder dachförmig abgeschrägt (17, 18) oder gewölbt (27, 29) ist;
c) der Ventilschließkörper (2, 3) wird durch Vorspannen verformt und an seiner Lagerstelle (10) stationär befestigt, wobei sich die Gestalt der Schenkel (15, 16) an den Abstand zwischen Ventilsitz (7) und Schließkörper (2, 3) anpaßt;
d) der Klebstoff wird ausgehärtet und dabei werden zugleich die Schenkelenden (25, 26) mit der Trägerfläche (17, 18; 27, 29) verklebt

## Claims

1. Valve, in particular gas valve, with a valve seat in the form of an annular valve seal, and with a valve closing body (2, 3) cooperating with the valve seat, the annular valve seal having an annular sealing part (1) effective in the lifting direction of the valve closing body (2, 3) and elastically deformable during operation and also two-limbed holding parts (15, 16) which are connected to said seal part, are permanently deformable under the action of an initial force and carry at their vertex the elastically deformable seal part (1), the holding parts (15, 16) being supported with the limb ends (25, 26) on a carrier (8) and being fastened to the latter, the deformable holding parts (15, 16) being likewise annular, and the space (9) delimited by the holding parts (15, 16) and the carrier (8) being filled with a curable filling compound, **characterized in that** at least one of the carrier-side supporting surfaces (17, 18, 27, 29) for the limb ends (25, 26) is inclined at an angle different from 90° relative to the lifting direction of the valve closing body (2, 3).

2. Valve according to Claim 1, **characterized in that** the inclined supporting surface (27, 29) of the carrier (8) is curved convexly or concavely relative to the sealing ring (1).

3. Valve according to Claim 1, **characterized in that** the inclined supporting surface (17, 18) of the carrier (8) is bevelled inwards and/or outwards.

4. Valve according to Claim 3, **characterized in that** the supporting surfaces (17, 18) are inclined in a roof-shaped manner on both sides, and, when the valve is in the open state, the vertex of the double-limbed ring (15, 16) is located above the ridge line (19) of the roof-shaped supporting surfaces (17, 18).

5. Valve according to Claim 3 or 4, **characterized in that** the angle of inclination (b) of the bevelled carrier surfaces (17, 18) relative to the plane of the valve seat is between 5° and 70°, preferably about 30°.

6. Valve according to Claim 3, 4 or 5, **characterized in that** the limb ends (25, 26) of the double-limbed ring (15, 16) which are seated on the carrier (8) are bevelled according to the inclination of the carrier surface (17, 18).

7. Method for producing a valve, in particular a gas valve, according to one of the preceding claims, the valve having a valve seat in the form of an annular valve seal and a valve closing body (2, 3) co-operating with the valve seat, with the following steps:
a) an annular sealing element consisting of an elastomeric ring (1) and of two likewise encircling limbs (15, 16) projecting at an acute angle from the ring is filled with a curable adhesive in a space (9) delimited by the two limbs (15, 16);
b) the sealing element is then placed with its limb ends (25, 26) onto an annular carrier surface (17, 18; 27, 29) which surrounds a valve passage (4) and which is either bevelled (17, 18) in a roof-shaped manner or curved (27, 29) towards the valve closing body (2, 3);
c) the valve closing body (2, 3) is deformed by prestressing and is fastened in a stationary manner at its bearing point (10), the shape of the limbs (15, 16) being adapted to the distance between the valve seat (7) and the closing body (2, 3) ;
d) the adhesive is cured and at the same time the limb ends (25, 26) are adhesively bonded to the carrier surface (17, 18; 27, 29).

## Revendications

1. Vanne, en particulier vanne à gaz, avec un siège de vanne en forme de joint d'étanchéité de vanne de forme annulaire et avec un corps de fermeture de vanne (2, 3) coopérant avec le siège de vanne, dans laquelle le joint d'étanchéité de vanne de forme annulaire présente une pièce d'étanchéité (1) de forme annulaire, déformable élastiquement en service et active dans la direction de levée du corps de fermeture de vanne (2, 3), ainsi que des pièces de soutien (15, 16) à deux branches, reliées à celle-ci, déformables de manière permanente sous l'action d'un effort initial, portant à leur sommet la pièce d'étanchéité élastiquement déformable (1), dans laquelle les pièces de soutien (15, 16) prennent appui par les extrémités des branches (25, 26) sur un support (8) et sont fixées à celui-ci, dans laquelle les pièces de soutien déformables (15, 16) sont également de forme annulaire, et dans laquelle l'espace (9) délimité par les pièces de soutien (15, 16) et le support (8) est rempli d'une masse de remplissage durcissable, **caractérisée en ce qu'**au moins une des faces d'appui (17, 18, 27, 29) pour les extrémités des branches (25, 26) du côté du support est inclinée d'un angle différent de 90° par rapport à la direction de levée du corps de fermeture de vanne (2, 3).

2. Vanne suivant la revendication 1, **caractérisée en ce que** la face d'appui inclinée (27, 29) du support (8) est incurvée de façon convexe ou concave en direction de l'anneau d'étanchéité (1).

3. Vanne suivant la revendication 1, **caractérisée en ce que** la face d'appui inclinée (17, 18) du support (8) est inclinée vers l'intérieur et/ou vers l'extérieur.

4. Vanne suivant la revendication 3, **caractérisée en ce que** les faces d'appui (17, 18) sont inclinées vers les deux côtés en forme de toit et le sommet de l'anneau à deux branches (15, 16) se trouve au-dessus de la ligne de faîte (19) des faces d'appui en forme de toit (17, 18), en position ouverte de la vanne.

5. Vanne suivant la revendication 3 ou 4, **caractérisée en ce que** l'angle d'inclinaison (b) des faces de support inclinées (17, 18) par rapport au plan du siège de vanne, est compris entre 5° et 70°, et vaut de préférence environ 30°.

6. Vanne suivant la revendication 3, 4 ou 5, **caractérisée en ce que** les extrémités des branches (25, 26) de l'anneau à deux branches (15, 16) appuyées sur le support (8) sont biseautées de façon correspondante à l'inclinaison de la face de support (17, 18).

7. Procédé pour fabriquer une vanne, en particulier une vanne à gaz, suivant l'une quelconque des revendications précédentes, dans lequel la vanne présente un siège de vanne en forme de joint d'étanchéité de forme annulaire et un corps de fermeture de vanne (2, 3) coopérant avec le siège de vanne, qui comporte les étapes suivantes:
a)un élément d'étanchéité de forme annulaire, se composant d'un anneau élastomère (1) et de deux branches (15, 16) également continues, dressées sur l'anneau sous un angle aigu, est rempli d'un adhésif durcissable dans un espace (9) délimité par les branches (15, 16) ;
b)l'élément d'étanchéité est alors appliqué par les extrémités (25, 26) de ses branches sur une face de support (17, 18; 27, 29) entourant un passage de vanne (4), laquelle est soit inclinée en forme de toit (17, 18) soit incurvée (27, 29) en direction du corps de fermeture de vanne (2, 3);
c)le corps de fermeture de vanne (2, 3) est déformé par serrage et fixé de façon stationnaire à son point d'appui (10), la configuration des branches (15, 16) étant adaptée à la distance entre le siège de vanne (7) et le corps de fermeture (2, 3);
d)l'adhésif est durci et ainsi les extrémités (25, 26) des branches sont en même temps collées à la face de support (17, 18; 27, 29).
